# FASCICULE DE BREVET EUROPEEN

(11) **EP 2 457 343 B1**
(45) Date de publication et mention de la délivrance du brevet: **17.05.2017**
(21) Numéro de dépôt: 10747600.4
(22) Date de dépôt: 02.07.2010
(51) Int. Cl.: H04J 3/06

(54) **PROCEDE ET SYSTEME DE SYNCHRONISATION DE HAUTE PRECISION**
HOCHPRÄZISES SYNCHRONISATIONSVERFAHREN UND SYSTEM
HIGH-PRECISION SYNCHRONISATION METHOD AND SYSTEM

(30) Priorité: 24.07.2009 FR 0903673
(43) Date de publication de la demande: 30.05.2012
(73) Titulaire: ALCATEL LUCENT, 92100 Boulogne-Billancourt (FR)
(72) Inventeur: BLONDEL, Thomas, F-91620 Nozay (FR); DI SIMONE, Simona, I-20059 Vimercate (IT)
(74) Mandataire: Mouney, Jérôme
(86) Numéro de dépôt international: PCT/EP2010/059485
(87) Numéro de publication internationale: WO 2011/009707

(56) Documents cités:
- EP-A2- 0 667 727
- US-A- 5 742 649
- US-A- 6 122 337
- US-A1- 2006 156 065

## Description

La présente invention se rapporte au domaine technique de la gestion des données temporelles et plus particulièrement à la synchronisation d'horloges.Des exemples sont donnés dans les documents EP 0667727 A2,US 6122337 A, US 5742649 A, et US 2006/0156065 A1. La synchronisation constitue un des enjeux clés conditionnant le bon fonctionnement des applications temps réel au sein des systèmes distribués. On désigne par « système distribué» ou « système réparti » tout ensemble d'entités connectées en réseau et communiquant via ce réseau, tel qu'un réseau de communication (filaire ou mobile), un réseau informatique, ou une architecture matérielle multiprocesseurs. Par ailleurs, on appelle ci-après « entité» tout processeur, application, noeud ou plus généralement un procédé ou un système requérant une information temporelle.

En effet, généralement, dans un système réparti, on distingue une pluralité d'entités nécessitant une notion commune du temps. Pour cela, il suffit, a priori,
- de référer toutes les entités à une seule horloge globale partagée ; ou
- d'équiper l'ensemble de ces entités par des horloges parfaitement synchrones.

Cependant, la dispersion spatiale de ces entités engendre des délais de transmission différents d'une entité à une autre, mettant à défaut la possibilité d'une vue globale instantanée d'une horloge partagée. En outre, deux horloges démarrant en phase ne demeurent jamais synchrones. Une variation à court terme dans les facteurs environnementaux (par exemple la température, la pression, l'altitude, la mobilité par effet doppler, la tension d'alimentation) ou à long terme telle que la vieillesse d'une horloge par rapport à une autre, engendrent des dérives plus ou moins importantes (jusqu'à plusieurs secondes par journée), mettant à défaut la seconde alternative.

Par conséquent, un procédé de synchronisation entre les entités d'un système réparti est indispensable.

On distingue deux approches permettant la synchronisation d'un ensemble de noeuds au sein d'un système distribué. La première, dite synchronisation externe, se base sur l'utilisation d'une horloge de référence externe. La deuxième approche, dite synchronisation interne, vise à maintenir un groupe d'horloges synchronisées.

Un procédé de synchronisation interne vise à converger toutes les horloges d'un système réparti vers une même heure. Cette dernière ne correspond pas au temps réel. Elle n'est que l'heure satisfaisant un certain compromis entre toutes les horloges.

Dans un procédé de synchronisation externe, les horloges des différentes entités d'un système réparti essaient de se rapprocher le plus possible d'une horloge commune (une horloge du système, ou extérieur au système). L'horloge commune peut être, par exemples, le temps GPS (*Global Positioning System*) ou le temps LORAN (LOng RAnge Navigation).

Une horloge comprend, principalement, un oscillateur et un compteur. L'oscillateur génère régulièrement des « coups » d'horloge, instants auxquels est incrémenté le compteur d'une unité. Il en résulte que le temps est donné par le compteur à un facteur multiplicatif près (Si on sait par exemple que 100 coups correspondent à une seconde, il suffit de diviser le compteur par 100 pour avoir le temps en secondes). L'oscillateur, caractérisé par une fréquence d'oscillation, est généralement suivi d'une mise en forme pour obtenir un signal périodique carré. Dans ce cas, un coup d'horloge peut correspondre, par exemple, à un front montant ou descendant du signal carré.

Plus généralement, considérons le cas canonique de la problématique de synchronisation, en s'intéressant à la synchronisation de deux horloges appartenant à deux entités communicantes, dont une sert d'horloge de référence pour la deuxième.

Ayant une horloge commune, la synchronisation de deux horloges distantes résulte de l'envoi du nombre de coups de l'horloge de référence, enregistrés dans une fenêtre temporelle de l'horloge commune, à la deuxième horloge. Ce nombre est connu par le vocable estampille, ou timestamp en anglais. En conséquence, l'horloge réceptrice règle son rythme à l'aide de l'estampille reçue et de l'horloge commune.

Cependant, l'estampille envoyée est un entier naturel de cycle d'oscillation de l'horloge de référence, ignorant, ainsi, toute fraction de période du signal de l'horloge de référence. Il en résulte que la précision maximale de la synchronisation est de l'ordre d'une période de l'horloge de référence.

Les systèmes et procédés connus sont imparfaits, notamment en raison de leur faible précision. Ils ont un pouvoir de résolution temporelle qui ne peut être en dessous de la période de l'horloge de référence. Ils ne permettent pas une description fine du nombre d'impulsions de l'horloge de référence observé dans une fenêtre temporelle de l'horloge commune.

Un objet de la présente invention est d'améliorer la précision de la synchronisation entre deux horloges.

Un autre objet de la présente invention est de réduire la dérive temporelle entre deux entités dans un réseau réparti.

Un autre objet de la présente invention est d'avoir un pourvoir de résolution inférieur à la durée d'un cycle de l'horloge de référence.

Un autre objet de la présente invention est d'améliorer la précision de la synchronisation à des fractions de la période des impulsions de l'horloge de référence.

Un autre objet de la présente invention est de réduire la gigue dans un réseau de communication véhiculant les messages de synchronisation.

Un autre objet de la présente invention est de garantir une synchronisation de haute précision avec un faible nombre d'estampilles transmises depuis l'horloge de référence à la seconde horloge.

Un autre objet de la présente invention est de garantir une synchronisation de haute précision avec une fenêtre temporelle d'observation finie.

Un autre objet de la présente invention est de réduire la dépendance de la précision du procédé de synchronisation à la fréquence de l'horloge commune.

Un autre objet de la présente invention est de définir une fonction d'ajustement de synchronisation.

Un autre objet de la présente invention est l'élimination des sources d'indéterminisme affectant un procédé de synchronisation en évitant le fait de moyenner sur plusieurs estampilles.

À cet effet, l'invention propose, suivant un premier aspect, un procédé de synchronisation d'horloges entre une première horloge de référence et une deuxième horloge à asservir sur la fréquence de l'horloge de référence, les deux partageant une horloge commune, ce procédé comprenant les étapes suivantes:
- calcul de la partie entière de l'estampille à l'aide de l'horloge de référence et l'horloge commune ;
- génération d'une horloge système locale à l'horloge de référence ;
- calcul du déphasage entre le signal de l'horloge système et celui de l'horloge de référence ;
- calcul du déphasage entre le signal de l'horloge système et celui de l'horloge commune ;
- calcul de la partie décimale de l'estampille ;
- envoi de l'estampille décimale en destination de la deuxième horloge ;
- asservissement de la deuxième horloge en utilisant l'horloge commune et l'estampille reçue.

L'invention propose, selon un deuxième aspect, un système de synchronisation d'horloges entre une première horloge de référence et une deuxième horloge à asservir sur la fréquence de l'horloge de référence, les deux partageant une horloge commune, ce système comprenant:
- une horloge système locale à l'horloge de référence ; et
- un oscillateur à contrôle numérique locale à l'horloge de référence.

D'autres caractéristiques et avantages de l'invention apparaîtront plus clairement et de manière concrète à la lecture de la description ci-après de modes de réalisation préférés, laquelle est faite en référence aux dessins annexés dans lesquels :
- les figures 1 et 2 illustrent schématiquement l'état de la technique ;
- la figure 3 illustre schématiquement un mode de calcul de l'estampille selon la présente invention.

Dans la description qui va suivre d'un procédé et d'un système de synchronisation de haute précision d'horloges, on part de l'hypothèse qu'un système réparti comprend au moins
- une première entité 1 dont l'horloge 11 servira de référence à au moins une deuxième entité 2, équipée à son tour par une horloge 12; et
- une horloge commune 3. Comme exemples d'horloges communes, on peut citer le temps GPS (Global Positioning System), le temps LORAN (LOng RAnge Navigation) ou tout autre temps décrété précis et accessible aux entités 1 et 2.

La relation entre les deux entités est, généralement, désignée par une relation client-serveur ou maître-esclave (master-slave en anglais) dans laquelle, l'horloge 12 de la deuxième entité 2 est asservie par l'horloge 11 de la première entité 1. Il est à noter qu'une entité peut être à la fois maître et esclave.

La synchronisation s'appuie sur la transmission régulière d'estampilles 4 de la première entité 1 vers la deuxième entité 2. Une estampille comprend une représentation d'un entier naturel qui reflète un nombre entier de coups d'horloges effectués par l'horloge de référence 11 dans une fenêtre temporelle d'observation de l'horloge commune 3.

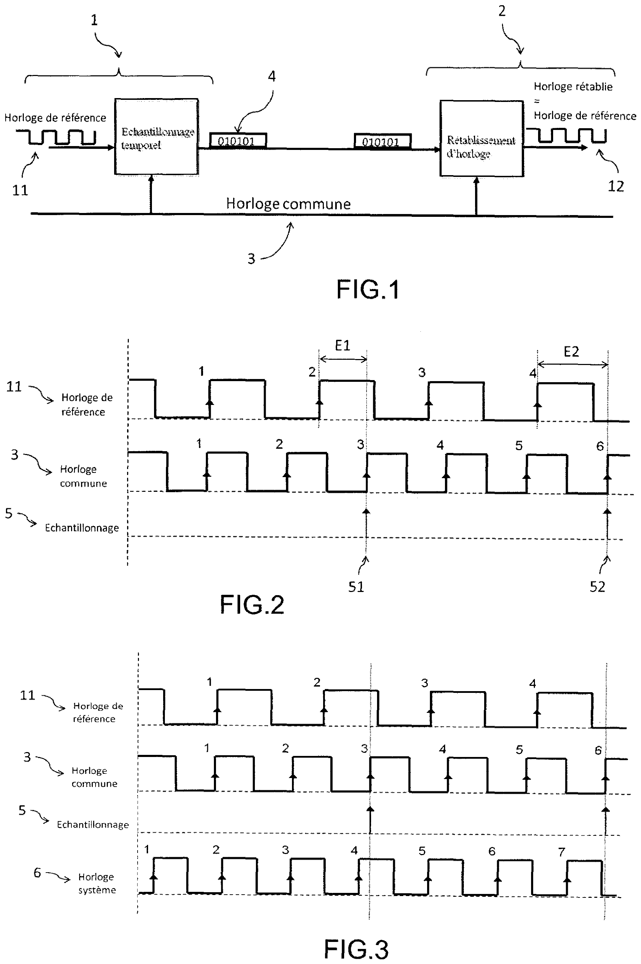

A titre illustratif, la figure 2 montre
- une horloge de référence 11 d'une certaine fréquence ;
- une horloge commune 3 d'une fréquence, de préférence, supérieure à celle de l'horloge de référence; et
- un échantillonnage 5 du signal de l'horloge de référence 11 à des intervalles de temps de l'horloge commune 3. L'échantillonnage 5 permet de déterminer le contenu de l'estampille 4.

Il est à noter que dans cet exemple,
- un coup d'horloge correspond à tout front montant du signal d'une horloge ; et
- la fenêtre temporelle d'observation du temps de l'horloge commune 3 est égale à trois fois la période du signal de l'horloge commune 3.

Il en résulte qu'une estampille est envoyée à la deuxième entité 2, tous les 3 périodes du signal de l'horloge commune 3. L'estampille 4, déduite aux instants d'échantillonnage 51 et 52, est de valeur, respectivement, 2 et 4. L'estampille 4 correspond au nombre de fronts montants du signal de l'horloge de référence 11 identifiés dans la fenêtre d'observation exprimée en nombre de période de l'horloge commune 3.

Dans une variante, l'estampille 4 comprend le nombre de fronts montants détectés depuis le dernier envoi d'estampille. La valeur de l'estampille aux instants d'échantillonnage 51 et 52, est, dans ce cas, égale, respectivement, à 2 et 2.

Il est à noter qu'aux instants d'échantillonnages 51 et 52, on enregistre une imprécision, respectivement, de E1 et E2. Ces imprécisions sont des fractions de la période du signal de l'horloge de référence 11.

E1 et E2 traduisent le déphasage entre le signal de l'horloge de référence 11 et celui de l'horloge commune 3 aux instants d'échantillonnage, respectivement, 51 et 52.

Soit E la somme des fractions de la période du signal de l'horloge de référence non prise en considération par l'estampille 4 dans une fenêtre d'observation. Il est à noter que cette somme est algébrique, autrement dit, à l'extrémité d'une fenêtre d'observation, on peut avoir une fraction en plus ou en moins de la période du signal de l'horloge de référence 11.

Afin de prendre en considération les fractions E de période du signal de l'horloge de référence 11, une horloge système 6 locale à l'horloge de référence 11 est utilisée, tel que le montre la figure 3.

L'horloge système 6 est de fréquence supérieure ou égale à celle de l'horloge de référence 11. Une telle horloge peut être facilement gérée par un réseau logique programmable (FPGA : Field-Programmable Gate Array) pourvu d'une horloge locale de préférence désynchronisée avec l'horloge commune 3 et l'horloge de référence 11.

L'horloge système 6 permet de quantifier les fractions E de période de l'horloge de référence 11 observées dans une fenêtre temporelle de l'horloge commune 3.

Pour cela, un oscillateur à contrôle numérique de phase (NCO : Numerically-Controlled oscillator), permet de calculer
- le déphasage entre l'horloge système 6 et l'horloge de référence 11 ; et
- le déphasage entre l'horloge système 6 et l'horloge commune 3.

Une telle utilisation de NCO intègre la considération de la phase des oscillations d'une horloge en plus des fronts montants.

Un compteur est associé à chaque calcul de déphasage. Le premier compteur s'incrémente à chaque front montant de l'horloge système 6 avec un pas égal au rapport entre la période du signal de l'horloge système 6 et celle du signal de l'horloge de référence 11. Le deuxième compteur s'incrémente à chaque front montant de l'horloge système 6 avec un pas égal au rapport entre la période du signal de l'horloge système 6 et celle du signal de l'horloge commune 3.

A chaque instant d'échantillonnage 51, 52, la partie décimale de l'estampille à envoyée est déduite des déphasages, respectivement, entre l'horloge système 6 et l'horloge système 11, et entre l'horloge système 6 et l'horloge commune 3.

La partie décimale de l'estampille à envoyer est égale à la partie décimale de la quantité obtenue par la soustraction
- du « pas d'incrémentation du premier compteur » multiplié par « le rapport entre la fréquence de l'horloge de référence 11 et la fréquence de l'horloge commune 3 », de
- la valeur du premier compteur à l'instant d'échantillonnage.

L'estampille à envoyer à la deuxième horloge 12, à asservir sur la fréquence de l'horloge de référence 11, est composée
- d'une partie entière donnée par le nombre de front montant dans une fenêtre temporelle de l'horloge commune ; et
- d'une partie décimale déduite du déphasage entre le signal de l'horloge système 6 et l'horloge de référence 11 et du déphasage entre l'horloge système 6 et l'horloge commune 3.

En variante, la valeur de l'estampille est donnée par la différence entre les valeurs calculées en deux instants d'échantillonnages successives à l'aide des valeurs du premier et second compteur.

Il est à noter que l'horloge système permet un sur-échantillonnage du signal de l'horloge de référence 11 ainsi que celui de l'horloge commune 3 qui se traduit par une meilleure description et donc une meilleure précision du procédé de la synchronisation.

Une quantification plus fine des coups de l'horloge de référence 11 dans une fenêtre temporelle d'observation finie est faite à l'aide d'une estampille de valeur décimale.

Il est à noter qu'une telle précision apporté est dépendante du nombre de bits disponibles pour coder la partie décimale.

En réception, la deuxième entité 2 réceptrice retrouve la fréquence d'oscillation de l'horloge de référence 11, à l'aide d'une boucle à verrouillage de phase (PLL : Phase-Locked Loop). Cette PLL permet d'asservir la fréquence de l'horloge 12, comprise dans la deuxième entité 2, sur la fréquence de l'horloge de référence 11.

Il est à noter que d'autres traitements peuvent être ajoutés au présent procédé de synchronisation afin de tenir compte des perturbations dues au canal de transmission telles que la variation des temps de retards des paquets (Paquet Delay variation) ou aussi à la perte des paquets.

## Revendications

1. Procédé de synchronisation d'horloges entre une première horloge de référence (11) et une deuxième horloge (12) à asservir sur la fréquence de la première horloge de référence (11), les deux partageant une horloge commune (3), ce procédé étant **caractérisé en ce qu'**il comprend les étapes suivantes :
- calcul de la partie entière de l'estampille à l'aide de la première horloge de référence (11) et l'horloge commune (3), cette partie entière de l'estampille étant le nombre entier de coups d'horloge effectués par la première horloge de référence (11) dans une fenêtre temporelle d'observation de l'horloge commune (3) ;
- génération d'une horloge système (6) locale à la première horloge de référence (11);
- calcul du déphasage entre le signal de l'horloge système (6) et celui de la première horloge de référence (11) ;
- calcul du déphasage entre le signal de l'horloge système (6) et celui de l'horloge commune (3);
- calcul de la partie décimale de l'estampille (4) à partir du déphasage calculé entre le signal de l'horloge système (6) et celui de la première horloge de référence (11) et du déphasage calculé entre le signal de l'horloge système (6) et celui de l'horloge commune (3), la partie décimale de l'estampille étant égale à la partie décimale de la quantité obtenue par la soustraction
du produit du rapport entre la période du signal de l'horloge système (6) et celle du signal de la première horloge de référence (11) par le rapport entre la fréquence de la première horloge de référence (11) et la fréquence de l'horloge commune (3), de
la valeur d'un compteur s'incrémentant à chaque coup d'horloge, dans la fenêtre temporelle d'observation, de l'horloge système avec un pas égal au rapport entre la période du signal de l'horloge système et celle du signal de la première horloge de référence;
- envoi de l'estampille décimale, composée de la partie entière et de la partie décimale de l'estampille, en destination de la deuxième horloge ;
- asservissement de la deuxième horloge (12) en utilisant l'horloge commune (3) et l'estampille reçue.

2. Procédé selon la revendication 1, **caractérisé en ce que** l'horloge système (6) est désynchronisée avec l'horloge de référence (11) et l'horloge commune (3).

3. Procédé selon l'une quelconque des revendications précédentes, **caractérisé en ce que** l'horloge système (6) a une fréquence supérieure ou égale à celle de l'horloge de référence (11).

4. Procédé selon la revendication 1, **caractérisé en ce que** le déphasage entre le signal de l'horloge système et celui de l'horloge de référence ou celui de l'horloge commune est calculé à l'aide d'un oscillateur à contrôle numérique.

5. Procédé selon la revendication 1, **caractérisé en ce que** l'horloge système (6) est gérée par un réseau logique programmable.

6. Système de synchronisation d'horloges entre une première horloge de référence (11) et une deuxième horloge (12) à asservir sur la fréquence de la première horloge de référence (11), les deux partageant une horloge commune (3), ce système étant **caractérisé en ce qu'**il comprend:
- des moyens pour calculer la partie entière de l'estampille à l'aide de la première horloge de référence (11) et l'horloge commune (3), cette partie entière de l'estampille étant le nombre entier de coups d'horloge effectués par la première horloge de référence (11) dans une fenêtre temporelle d'observation de l'horloge commune (3)
- une horloge système (6) locale à la première horloge de référence (11);
- un oscillateur à contrôle numérique locale à la première horloge de référence (11) agencé pour
o calculer le déphasage entre le signal de l'horloge système (6) et celui de la première horloge de référence (11) ;
o calculer le déphasage entre le signal de l'horloge système (6) et celui de l'horloge commune (3)
- des moyens pour calculer la partie décimale de l'estampille (4) à partir du déphasage calculé entre le signal de l'horloge système (6) et celui de la première horloge de référence (11) et du déphasage calculé entre le signal de l'horloge système (6) et celui de l'horloge commune (3), la partie décimale de l'estampille étant égale à la partie décimale de la quantité obtenue par la soustraction
du produit du rapport entre la période du signal de l'horloge système (6) et celle du signal de la première horloge de référence (11) par le rapport entre la fréquence de la première horloge de référence (11) et la fréquence de l'horloge commune (3), de
la valeur d'un compteur s'incrémentant à chaque coup d'horloge, dans la fenêtre temporelle d'observation, de l'horloge système avec un pas égal au rapport entre la période du signal de l'horloge système et celle du signal de la première horloge de référence;
- des moyens pour envoyer l'estampille décimale, composée de la partie entière et de la partie décimale de l'estampille, en destination de la deuxième horloge (12) ;
- des moyens pour asservir la deuxième horloge (12) en utilisant l'horloge commune (3) et l'estampille reçue.

7. Système selon la revendication 6, **caractérisé en ce que** l'horloge système (6) est gérée par un réseau logique programmable.

## Patentansprüche

1. Verfahren zur Synchronisation vom Takten zwischen einem ersten Bezugstakt (11) und einem zweiten, auf die Frequenz des ersten Bezugstakts (11) zu regelnden Takts (12), wobei beide Takte einen gemeinsamen Takt (3) teilen, wobei das Verfahren **dadurch gekennzeichnet ist, dass** es die folgenden Schritte umfasst:
- das Berechnen des ganzzahligen Teils des Zeitstempels anhand des ersten Bezugstakts (11) und des gemeinsamen Takts (3), wobei besagter ganzzahliger Teil des Zeitstempels eine ganze Zahl ist, die für die Anzahl der Taktschläge des ersten Bezugstakts (11) in einem erstem Beobachtungszeitfenster des gemeinsamen Takts (3) steht;
- das Generieren eines lokalen Systemtakts (6) am ersten Bezugstakt (11);
- das Berechnen einer Phasenverschiebung zwischen dem Signal des Systemtakts (6) und dem Signal des ersten Bezugstakts (11);
- das Berechnen einer Phasenverschiebung zwischen dem Signal des Systemtakts (6) und dem Signal des gemeinsamen Takts (3);
- das Berechnen einer Dezimale des Zeitstempels (4) auf der Grundlage der berechneten Phasenverschiebung zwischen dem Signal des Systemtakts (6) und dem Signal des ersten Bezugstakts (11) sowie der berechneten Phasenverschiebung zwischen dem Signal des Systemtakts (6) und dem Signal des gemeinsamen Takts (3), wobei die Dezimale des Zeitstempels der Dezimale desjenigen Betrags entspricht, der sich aus der Subtraktion
des Produkts des Verhältnisses zwischen der Periodendauer des Signals des Systemtakts (6) und der Zeitspanne des Signals des ersten Bezugstakts (11) multipliziert mit dem Verhältnis zwischen der Frequenz des ersten Bezugstakts (11) und der Frequenz des gemeinsamen Takts (3)
von dem Wert eines Taktzählers ergibt, der sich im Beobachtungszeitfenster mit jedem Taktschlag des Systemtakts in Intervallen erhöht, die dem Verhältnis zwischen der Periodendauer des Signals des Systemtakts und der des Signals des ersten Bezugstakts entsprechen;
- das Senden des mit Dezimale angegebenen Zeitstempels, gebildet vom ganzzahligen Anteil und vom dezimalen Anteil des Zeitstempels, an den zweiten Takt;
- das Regeln des zweiten Takts (12) unter Verwendung des gemeinsamen Takts (3) und des empfangenen Zeitstempels.

2. Verfahren nach Anspruch 1, **dadurch gekennzeichnet, dass** der Systemtakt (6) gegenüber dem Bezugstakt (11) und dem gemeinsamen Takt (3) desynchronisiert ist.

3. Verfahren nach einem jeglichen der vorgenannten Ansprüche, **dadurch gekennzeichnet, dass** der Systemtakt (6) eine höhere oder die gleiche Frequenz hat, als/wie der Bezugstakt (11).

4. Verfahren nach Anspruch 1, **dadurch gekennzeichnet, dass** die Phasenverschiebung zwischen dem Signal des Systemtakts und dem Signal des Bezugstakts mithilfe eines nummerisch gesteuerten Oszillators berechnet wird.

5. Verfahren nach Anspruch 1, **dadurch gekennzeichnet, dass** der Systemtakt (6) von einer programmierbaren logischen Anordnung generiert wird.

6. System zur Synchronisation vom Takten zwischen einem ersten Bezugstakt (11) und einem zweiten, auf die Frequenz des ersten Bezugstakts (11) zu regelnden Takts (12), wobei beide Takte einen gemeinsamen Takt (3) teilen, wobei das System **dadurch gekennzeichnet ist, dass** es umfasst:
- Mittel für das Berechnen des ganzzahligen Teils des Zeitstempels anhand des ersten Bezugstakts (11) und des gemeinsamen Takts (3), wobei besagter ganzzahliger Teil des Zeitstempels eine ganze Zahl ist, die für die Anzahl der Taktschläge des ersten Bezugstakts (11) in einem erstem Beobachtungszeitfenster des gemeinsamen Takts (3) steht;
- einen lokalen Systemtakt (6) am ersten Bezugstakt (11);
- einen nummerisch gesteuerten Oszillator, angeordnet am ersten Bezugstakt (11) und ausgelegt für
∘ das Berechnen einer Phasenverschiebung zwischen dem Signal des Systemtakts (6) und dem Signal des ersten Bezugstakts (11);
∘ das Berechnen einer Phasenverschiebung zwischen dem Signal des Systemtakts (6) und dem Signal des gemeinsamen Takts (3);
- Mittel für das Berechnen einer Dezimale des Zeitstempels (4) auf der Grundlage der berechneten Phasenverschiebung zwischen dem Signal des Systemtakts (6) und dem Signal des ersten Bezugstakts (11) sowie der berechneten Phasenverschiebung zwischen dem Signal des Systemtakts (6) und dem Signal des gemeinsamen Takts (3), wobei die Dezimale des Zeitstempels der Dezimale desjenigen Betrags entspricht, der sich aus der Subtraktion
des Produkts des Verhältnisses zwischen der Periodendauer des Signals des Systemtakts (6) und der Zeitspanne des Signals des ersten Bezugstakts (11) multipliziert mit dem Verhältnis zwischen der Frequenz des ersten Bezugstakts (11) und der Frequenz des gemeinsamen Takts (3)
von dem Wert eines Taktzählers ergibt, der sich im Beobachtungszeitfenster mit jedem Taktschlag des Systemtakts in Intervallen erhöht, die dem Verhältnis zwischen der Periodendauer des Signals des Systemtakts und der des Signals des ersten Bezugstakts entsprechen;
- Mittel für das Senden des mit Dezimale angegebenen Zeitstempels, gebildet vom ganzzahligen Anteil und vom dezimalen Anteil des Zeitstempels, an den zweiten Takt (12);
- Mittel für das Regeln des zweiten Takts (12) unter Verwendung des gemeinsamen Takts (3) und des empfangenen Zeitstempels.

7. System nach Anspruch 6, **dadurch gekennzeichnet, dass** der Systemtakt (6) von einer programmierbaren logischen Anordnung generiert wird.

## Claims

1. A method for synchronizing clocks between a first reference clock (11) and a second clock (12) to be set to the frequency of the first reference clock (11), both sharing a common clock (3), that method being **characterized in that** it comprises the following steps:
- calculating the integer part of the timestamp using the first reference clock (11) and the common clock (3), that integer part of the timestamp being the whole number of clock ticks made by the first reference clock (11) in an observation time window of the common clock (3);
- generating a system clock (6) local to the first reference clock (11);
- calculating the phase shift between the signal of the system clock (6) and that of the first reference clock (11);
- calculating the phase shift between the signal of the system clock (6) and that of the common clock (3);
- calculating the decimal part of the timestamp (4) based on the phase shift calculated between the signal of the system clock (6) and that of the first reference clock (11) and on the phase shift calculated between the signal of the system clock (6) and that of the common clock (3), the decimal part of the timestamp being equal to the decimal part of the quantity obtained by subtracting
the product of the ratio between the period of the signal of the system clock (6) and that of the signal of the first reference clock (11) times the ratio between the frequency of the first reference clock (11) and the frequency of the common clock (3),
from the value of a counter that increments with each clock tick, within the observation time window, of the system clock by an increment equal to the ratio between the period of the signal of the system clock and that of the signal of the first reference clock;
- sending the decimal timestamp, composed of the integer part and of the decimal part of the timestamp, to the second clock;
- setting the second clock (12) using the common clock (3) and the timestamp received.

2. A method according to claim 1, **characterized in that** the system clock (6) is desynchronized with the reference clock (11) and the common clock (3).

3. A method according to any one of the preceding claims, **characterized in that** the system clock (6) has a frequency greater than or equal to that of the reference clock (11).

4. A method according to claim 1, **characterized in that** the phase shift between the signal of the system clock and that of the reference clock or that of the common clock is calculated using a digitally control oscillator.

5. A method according to claim 1, **characterized in that** the system clock (6) is managed by a field-programmable gate array.

6. A system of synchronizing clocks between a first reference clock (11) and a second clock (12) to be set to the frequency of the first reference clock (11), both sharing a common clock (3), that system being **characterized in that** it comprises:
- means for calculating the integer part of the timestamp using the first reference clock (11) and the common click (3), that integer part of the timestamp being the whole number of clock ticks made by the first reference clock (11) in an observation time window of the common clock (3);
- a system clock (6) local to the first reference clock (11);
- a digitally controlled oscillator local to the first reference clock (11) arranged to
∘ calculate the phase shift between the signal of the system clock (6) and that of the first reference clock (11);
∘ calculate the phase shift between the signal of the system clock (6) and that of the common clock (3);
- means for calculating the decimal part of the timestamp (4) based on the phase shift calculated between the signal of the system clock (6) and that of the first reference clock (11) and on the phase shift calculated between the signal of the system clock (6) and that of the common clock (3), the decimal part of the timestamp being equal to the decimal part of the quantity obtained by subtracting
the product of the ratio between the period of the signal of the system clock (6) and that of the signal of the first reference clock (11) times the ratio between the frequency of the first reference clock (11) and the frequency of the common clock (3),
from the value of a counter that increments with each clock tick, within the observation time window, of the system clock by an increment equal to the ratio between the period of the signal of the system clock and that of the signal of the first reference clock;
- means for sending the decimal timestamp, composed of the integer part and of the decimal part of the timestamp, to the second clock (12);
- means for setting the second clock (12) using the common clock (3) and the timestamp received.

7. A system according to claim 6, **characterized in that** the system clock (6) is managed by a field-programmable gate array.
